# EUROPÄISCHE PATENTSCHRIFT

(11) **EP 2 670 973 B1**
(45) Veröffentlichungstag und Bekanntmachung des Hinweises auf die Patenterteilung: **19.07.2017**
(21) Anmeldenummer: 12701007.2
(22) Anmeldetag: 26.01.2012
(51) Int. Cl.: F02N 11/14, F02N 11/08

(54) **KRAFTFAHRZEUG MIT EINER FREMDSTARTVORRICHTUNG**
MOTOR VEHICLE COMPRISING A JUMP START DEVICE
VÉHICULE À MOTEUR POURVU D'UN DISPOSITIF D'ALLUMAGE COMMANDÉ

(30) Priorität: 03.02.2011 DE 102011003564
(43) Veröffentlichungstag der Anmeldung: 11.12.2013
(73) Patentinhaber: Bayerische Motoren Werke Aktiengesellschaft, 80809 München (DE)
(72) Erfinder: PRÖBSTLE, Hartmut Dr.,, 97082 Würzburg (DE)
(86) Internationale Anmeldenummer: PCT/EP2012/051201
(87) Internationale Veröffentlichungsnummer: WO 2012/104193

(56) Entgegenhaltungen:
- EP-A2- 1 067 648
- WO-A1-02/087068
- DE-A1- 10 063 289
- DE-A1-102005 038 576

## Beschreibung

Die Erfindung betrifft ein Kraftfahrzeug mit einer Fremdstartvorrichtung, wobei das Kraftfahrzeug über einen Verbrennungsmotor mit Starter verfügt, das Kraftfahrzeug mit mindestens zwei Teilbordnetzen, die über ein elektrisches Koppelelement miteinander gekoppelt sind, und je Teilbordnetz mit mindestens einem wiederaufladbaren elektrischen Energiespeicher ausgestattet ist, und das Kraftfahrzeug über einen Fremdstartstützpunkt verfügt.

Üblicherweise ist das Bordnetz von Kraftfahrzeugen mit einer Starterbatterie ausgestattet, um den Motor mit einem Starter zu starten und Verbraucher bei mangelnder Deckung mit elektrischer Leistung durch den Generator mit elektrischer Leistung zu versorgen. Die Aufgaben der Starterbatterie gehen also über das bloße Starten des Motors hinaus, so dass die Starterbatterie in der modernen Fahrzeugentwicklung als Bordnetzbatterie oder SLI-Batterie für Starting (Anlassen), Lighting (Licht) und Ignition (Zündung) bezeichnet wird. Kommt es zu einem Batterieausfall oder Batteriedefekt, kann das Fahrzeug fremdgestartet und/oder die Batterie nachgeladen werden. Sowohl zum Fremdstart als auch zum Nachladen wird eine externe Strom- und Spannungsquelle wie etwa ein Ladegerät oder die Bordnetzbatterie eines anderen Fahrzeugs (Spenderfahrzeug), mit der Batterie des Empfängerfahrzeugs galvanisch verbunden. Die elektrische Verbindung wird mit Überleitungskabeln hergestellt. Ein Überleitungskabelsatz besteht aus zwei isolierten Leitungen, die mit Klemmen oder Zangen abschließen, welche für die Größe von genormten Batteriepolen ausgelegt sind (siehe Norm EN 50342-2 "Lead-acid starter batteries. Dimensions of batteries and marking of terminals." und Norm DIN 72553 "Starthilfekabel für Straßenfahrzeuge mit Verbrennungsmotor; Maße, Anforderungen, Prüfung"). Die Plusleitung des Kabelsatzes verbindet die positiven Potentiale, das bedeutet zum Beispiel die beiden Pluspole der von Empfänger- und Spenderbatterie oder den Pluspol der Empfängerbatterie mit dem Plus-Ausgang eines Ladegeräts. Die Minusleitung stellt eine gemeinsame Masse her. Bei einem Fremdstart fließen hohe Ströme (nahe an den Bereich von Kiloampere), so dass die Leitungen des Kabelsatzes einen entsprechend hohen Leitungsquerschnitt aufweisen. Bei vielen Fahrzeugmodellen sind die Batteriepole nicht frei zugänglich wie etwa beim Verbau im Kofferraum. In diesem Fall wird nicht der Pluspol der Batterie kontaktiert sondern ein mit der Plusleitung der Batterie galvanisch verbundenes Terminal. Dieses Terminal wird als Fremdstartstützpunkt bezeichnet und ist ein für den Bestimmungszweck des Nachladens und Fremdstartens im Fahrzeug und/oder Fahrzeugbegleitbuch ausgewiesener und leicht von außen zugänglicher Anschluss. Er befindet sich in der Regel im Bereich des Motorraums und ist nach dem Öffnen der Motorhaube frei zugänglich, um eine Polzange anzuschließen. Ein verpolsicherer Fremdstartschaltkreis für ein Fahrzeug mit einer Starterbatterie ist beispielsweise in US 6 211 577 B1 beschrieben. Die DE 100 63 289 A1 beschreibt einen Fremdstartschaltkreis für Fahrzeuge mit dualem Spannungssystem. Weiterhin verfügen moderne Kraftfahrzeuge mit rein verbrennungsmotorischen als auch elektrisch kombinierten, hybriden Antrieben mit einer Spannungslage des Bordnetzes von 12 Volt über eine Motor-Stopp-Start-Funktion, d.h. der Motor wird in geeigneten Fahrsituationen während des Fahrbetriebs abgestellt und nach kurzer Zeit wieder neu gestartet. Das Warten an einer roten Ampel oder an einem Bahnübergang können als Beispiele angeführt werden. Das Unterbinden des Motorlaufs bewirkt eine Treibstoffeinsparung. Aufgrund der im Vergleich zu Fahrzeugen ohne Stopp-Start-Funktion häufigeren Anzahl von Motorstarts und der Notwendigkeit, während der Abstellzeit des Motors bei Fahrbetrieb die elektrischen Verbraucher über die Batterie versorgen zu müssen, wird die Batterie des Fahrzeugs stark beansprucht. Deshalb sind Fahrzeuge mit Start-Stopp-Funktion oder auch Fahrzeuge mit hoher Grundstrombelastung wie Kommunal-oder Behördenfahrzeuge häufig mit einem zweiten Bordnetz ausgestattet, das über eine eigene Batterie verfügt, welche oft als Zustartbatterie bezeichnet wird. Das Teilbordnetz mit der Zustartbatterie ist vom Teilbordnetz mit der Hauptbatterie, welche auch als Basisbatterie bezeichnet wird, durch ein Batterietrennrelais und/oder einen Gleichstromwandler getrennt. Eine kostenoptimierte Variante ist die Nutzung eines unidirektionalen Gleichstromwandlers ohne Batterietrennrelais. Der Gleichstromwandler wird vom Teilbordnetz mit der Hauptbatterie elektrisch versorgt und überträgt elektrische Leistung von seinem eingangsseitigen Basisbordnetz zu seinem ausgangsseitigen Zustartbordnetz. Meist befindet sich im eingangsseitigen Bordnetz mit der Hauptbatterie das Motorsteuergerät und im ausgangsseitigen Bordnetz mit der Zustartbatterie der Starter. In der Schrift US 6 396 240 B1 ist für ein Fahrzeug mit zwei über einen Gleichstromwandler gekoppelten Bordnetzbatterien eine Fremdstarteinrichtung mit einer dritten Batterie beschrieben.

Es ist eine Aufgabe der Erfindung, eine verbesserte Fremdstartvorrichtung in einem Kraftahrzeug mit mindestens zwei Teilbordnetzen anzugeben.

Gelöst wird diese Aufgabe durch eine Fremdstartvorrichtung gemäß Anspruch 1. Vorteilhafte Ausführungsformen und Weiterbildungen der Erfindung ergeben sich aus den abhängigen Ansprüchen.

Erfindungsgemäß ist die Fremdstartvorrichtung gekennzeichnet durch einen mehrstufigen Fremdstartschalter, welcher bei Einstellung einer ersten Schaltstufe die Teilbordnetze und den Fremdstartstützpunkt jeweils galvanisch voneinander trennt und bei Einstellung einer zweiten Schaltstufe die Teilbordnetze und den Fremdstartstützpunkt jeweils galvanisch miteinander verbindet.

Es ist ein Vorteil der Erfindung, dass im Normalbetrieb des Fahrzeugs die Teilbordnetze galvanisch voneinander getrennt betrieben werden können. Ein in der Software des Fahrzeugs umgesetztes Leistungs- und Energiemanagement vermittelt zwischen den beiden Bordnetzen über den Gleichstromwandler als elektrische Kopplung. Bei außergewöhnlichen Situationen wie etwa einem Liegenbleiben des Fahrzeugs können die Teilbordnetze durch Einstellung der zweiten Schaltstufe des Fremdstartschalters galvanisch miteinander verbunden werden. Falls beispielsweise ein Energiespeicher einen Mangel an Ladung aufweist, kann es zu einem internen Ladungsausgleich mit dem anderen Energiespeicher oder den anderen Energiespeichern kommen.

Nach einer Ausführungsform der Erfindung ist das elektrische Koppelelement, das die Teilbordnetze miteinander koppelt, als Gleichstromwandler und/oder als Relais oder Schalter ausgeführt.
Die Allgemeinheit wird nicht beschränkt, falls in der vorliegenden Beschreibung ein Gleichstromwandler betrachtet wird.

Gemäß einer Ausführungsform der Erfindung ist bei Einstellung der zweiten Schaltstufe des Fremdstartschalters der Fremdstartstützpunkt elektrisch kontaktierbar, um die wiederaufladbaren elektrischen Energiespeicher über den Fremdstartstützpunkt von einer äußeren Spannungsquelle zu laden.

Diese Ausführungsform hat zum Vorteil, dass die Fremdstartvorrichtung ein Wiederaufladen aller Energiespeicher von einer äußeren Spannungsquelle ermöglicht. Alle Energiespeicher sind galvanisch mit der äußeren Spannungsquelle verbunden, so dass eine Limitierung der Ladeleistung durch die Ladungsaufnahmefähigkeit des Energiespeichers oder durch die Stromabgabefähigkeit der externen Spannungsquelle gegeben ist.

Nach einer weiteren Variante der Erfindung ist der Fremdstartstützpunkt bei Einstellung der zweiten Schalterstufe elektrisch kontaktierbar, um den Starter von einer äußeren Spannungsquelle mit elektrischer Leistung für einen Fremdstart des Verbrennungsmotors zu versorgen.

Dies hat den besonderen Vorteil, dass das Kraftfahrzeug von einer äußeren Spannungsquelle wie etwa einem Ladegerät oder einer Starterbatterie eines Spenderfahrzeugs fremdgestartet werden kann. In der zweiten Schaltstufe des Fremdstartschalters sind alle Teilbordnetze und damit alle Energiespeicher galvanisch mit der äußeren Leistungsquelle verbunden. Ein Fremdstart kann auch erfolgen, falls alle Energiespeicher, beispielsweise infolge einer langen Standzeit, tiefentladen sind. Die Fremdstarteinrichtung ermöglicht, dass alle für einen Start nötigen Steuergeräte unabhängig von der spezifischen Bordnetztopologie, d.h. in welchen Teilbordnetzen die Steuergeräte integriert sind, unter Betriebsspannung gesetzt werden. Auch der Starter kann mit dem für einen Motorstart sehr hohen Startstrom bis circa einem Kiloampere von der externen Stromquelle versorgt werden.

Gemäß einer besonders bevorzugten Ausführungsform der Erfindung ist der Fremdstartstützpunkt im Wesentlichen zylinderförmig ausgeführt ist, das heißt er weist eine zylinderartige Grundform auf. Der Fremdstartschalter ist im Wesentlichen ringförmig ausgeführt, das heißt er weist eine ringartige Grundform auf. Der Fremdstartschalter umschliesst den Fremdstartstützpunkt mit galvanischer Verbindung. Der Fremdstartstützpunkt und der Fremdstartschalter verfügen über einen gemeinsamen Druckmechanismus und/oder einen Drehmechanismus, durch welchen der Fremdstartschalter in einer von zumindest zwei vorgegebenen Stellpositionen gegenüber dem Fremdstartstützpunkt fixierbar ist.

Die Ausführungsform der Fremdstartvorrichtung bietet den Vorteil, dass der Fremdstartstützpunkt in dem Fremdstartschalter integriert ist und eine leitende Verbindung zwischen diesen beiden Komponenten besteht.

Gemäß einer Weiterbildung der vorliegenden Erfindung ist bei eingestellter erster Schaltstufe des Fremdstartschalters der Fremdstartschalter relativ zum Fremdstartstützpunkt in einer oberen Stellposition und bei eingestellter zweiter Schaltstufe des Fremdstartschalters relativ zum Fremdstartstützpunkt in einer unteren Stellposition fixiert. Bei in der oberen Stellposition fixiertem Fremdstartschalter ist die Mantelfläche der zylinderartigen Grundform des Fremdstartstützpunktes geometrisch abgeschirmt. Bei in der unteren Stellposition fixiertem Fremdstartschalter ist die Mantelfläche der zylinderartigen Grundform des Fremdstartstützpunktes geometrisch zumindest teilweise für eine elektrische Kontaktierung offen zugänglich.

Diese Ausführung gewährleistet, dass der Fremdstartstützpunkt mit einer Klemme oder Zange eines gebrauchsüblichen Starterkabels oder Überbrückungskabels in der oberen Stellposition nicht kontaktierbar ist. In der unteren Stellposition wird der in dem Fremdstartschalter integrierte Fremdstartstützpunkt freigelegt, so dass seine Mantelfläche mit einer Klemme oder Zange greifbar ist.

Gemäß einer weiteren bevorzugten Ausführungsform ist der Fremdstartstützpunkt mit einer nichtleitenden Halterung verbunden. Zwischen der Halterung und dem Fremdstartschalter wirkt ein elastisches Federelement in axialer Richtung des Fremdstartstützpunktes rückstellend.

Das elastische Federelement übt auf den Fremdstartschalter eine Kraft aus, welche von der Halterung weggerichtet ist.

Zusätzlich kann der Fremdstartschalter mindestens einen aufgesetzten Arretierstift an der dem Fremdstartstützpunkt zugewandten Seite der ringartigen Grundform des Fremdstartschalters aufweisen und der Arretierstift in radiale Richtung der ringartigen Grundform des Fremstartschalters und der zylinderartigen Grundform des Fremdstartstützpunktes weisen.

Vorzugsweise verfügt der Fremdstartstützpunkt für jeden Arretierstift über eine abgesetzte erste Nut. Die erste Nut führt den Arretierstift in Form einer Nut-Feder-Verbindung in axialer Richtung des Fremdstartstützpunktes. Der Arretierstift ist am von der Halterung abgewandten Ende der abgesetzten ersten Nut durch die Rückstellung des elastischen Federelements in der oberen Stellposition fixierbar. Der Fremdstartstützpunkt weist für jeden Arretierstift eine abgesetzte zweite Nut auf, die senkrecht zur ersten Nut ausgerichtet ist und die an dem der Halterung zugewandten Ende der ersten Nut in die erste Nut in einer L-Form übergeht. Die zweite Nut führt den Arretierstift in Form einer Nut-Feder-Verbindung senkrecht zur axialen und senkrecht zur radialen Richtung der zylinderartigen Grundform des Fremdstartstützpunktes, das heisst die zweite Nut führt den Fremdstartschalter rotatorisch um den Fremdstartstützpunkt. Der Arretierstift ist in der zweiten Nut durch die Rückstellung des elastischen Federelements in der unteren Stellposition fixierbar.

Diese Ausführung einer Nut-Feder-Verbindung zwischen dem Arretierstift oder den Arretierstiften und den Nuten bewirkt, dass der Fremdstartschalter reversibel von der unteren Stellposition in die obere Stellposition gebracht werden kann. Die Einstellung der unteren Stellposition ausgehend von der oberen Stellposition ist dadurch erreichbar, dass einer Druckbewegung des Fremdstartschalters in Richtung der Halterung eine erste Drehbewegung folgt. Bei der Druckbewegung führt der Arretierstift oder führen die Arretierstifte den Fremdstartschalter relativ zur axialen Richtung des Fremdstartstützpunkts bis das abgesetzte, der Haltung zugewandte Ende der ersten Nut erreicht ist und der Arretierstift oder die Arretierstifte in die zweite Nut geführt werden können. Sind der Stift oder die Stifte in der zweiten Nut, befindet sich der Fremdstartschalter relativ zum Fremdstartstützpunkt in der unteren Stellposition. Die erste Rotationsbewegung kann so weit erfolgen, bis der Stift oder die Stifte das abgesetzte, von der ersten Nut abgewandte Ende der zweiten Nut erreichen. Falls der Fremdstartstützpunkt die Kombination aus erster und zweiter Nut mindestens zwei Mal aufweist, ist eine technische Ausführbarkeit der Drehbewegung nur gewährleistet, wenn sich zwischen zwei ersten Nuten genau eine zweite Nut befindet. Die Einstellung der oberen Stellposition ausgehend von der unteren Stellposition ist dadurch erreichbar, dass eine der ersten Drehbewegung gegenläufige zweite Drehbewegung ausgeführt wird bis der Stift oder die Stifte das der ersten Nut zugewandte Ende der abgesetzten zweiten Nut erreichen und in die erste Nut übergeführt werden. Die Rückstellkraft des elastischen Elements bewegt den Fremdstartschalter relativ zum Fremdstartstützpunkt in die obere Stellposition.

Gemäß einer weiteren Variante der Erfindung ist der nichtleitenden Halterung für jedes Teilbordnetz mindestens ein leitendes Element aufgeprägt, mit welchem das jeweilige Teilbordnetz galvanisch verbunden ist. Die leitenden Elemente sind voneinander galvanisch getrennt. Der Fremdstartschalter ist bei eingestellter erster Schaltstufe des Fremdstartschalters von den leitenden Elementen galvanisch getrennt. Bei eingestellter zweiter Schaltstufe des Fremdstartschalters ist der Fremdstartschalter mit den leitenden Elementen galvanisch verbunden.

Diese Variante stellt sicher, dass bei eingestellter zweiter Schaltstufe des Fremdstartschalters der Fremdstartstützpunkt eine leitende Verbindung zu den Teilbordnetzen aufweist. Bei eingestellter erster Schaltstufe des Fremdstartschalters ist der Fremdstartstützpunkt von den Teilbordnetzen getrennt.

Die Erfindung beruht auf den nachfolgend dargelegten Überlegungen:
Um ein Kraftfahrzeug extern mit Strom und Spannung zu versorgen, verfügt das Bordnetz des Fahrzeugs über einen Fremdstartstützpunkt. An diesem kann die Bordnetzbatterie beispielsweise im Produktionswerk, während oder nach langer Standphase oder bei einem Werkstattaufenthalt mit einer externen Spannungsquelle oder einen externen Batterie geladen werden.
Der Fremdstartstützpunkt ist bei Fahrzeugen mit Mehrspeicherbordnetzen unzureichend. Dies sind etwa Fahrzeuge mit Start-Stopp-Funktionalität, die ein zusätzliches, vom Basisbordnetz über einen Schalter oder einen unidirektionalen Gleichstromwandler separiertes Zustartbordnetz mit eigenen elektrischen Energiespeichern als Zustartbatterien oder Zustartspeicher aufweisen. Durch den Gleichstromwandler sind das Basisbordnetz und das Zustartbordnetz miteinander elektrisch gekoppelt, jedoch galvanisch voneinander getrennt. Die von der Batterie im Basisbordnetz zur Batterie im Zustartbordnetz transferierte elektrische Leistung bemisst sich nach der Spezifikation des Gleichstromwandlers. Überlicherweise erfolgt die Auslegung des Gleichstromwandlers anhand von Kosten- und Bauraumgesichtspunkten für den Normalbetrieb des Fahrzeugs. Die Dimensionierung des Wandlers ist auf die im Mittel während der Fahrzeit nachzuladende Leistung ausgelegt und liegt typischerweise im Bereich von wenigen hundert Watt. Üblicherweise ist der Wandler unidirektional ausgeführt und ermöglicht nur einen Energiefluss von der Bordnetz- zur Zustartbatterie. Liegen zum Beispiel beide Batterien im tiefentladenen Zustand vor, so dass beide Batterien nachgeladen werden müssen, verhindert die Auslegung des Gleichstromwandlers ein Nachladen der Batterien in einem vertretbaren Zeitraum. Insbesondere die für einen Start des Verbrennungsmotors erforderliche elektrische Leistung bei kurzzeitig (Zeitraum von einigen Millisekunden) 600 Ampere bis 800 Ampere ist nicht transferierbar. Dies ist auch bei nicht mehr startfähigen, defekten oder hochohmigen Zustartbatterien der Fall. Die übliche Anbindung des Fremdstartstützpunktes an das Basisbordnetz ermöglicht ein Fremdladen der Basisbatterie mit einer in der Regel mittleren Ladeleistung von wenigen hundert Watt, jedoch keine ausreichende Ladung der Zustartbatterie in kurzer Zeit. Die Startfähigkeit ist damit kurzfristig nicht gegeben. Umgekehrt macht das Anbringen des Fremdstartstützpunktes an das Zustartbordnetz einen bidirektionalen Gleichstromwandler zum Nachladen einer entladenen Bordnetzbatterie erforderlich. Außerdem besteht bei einem totalen Ausfall der Spannungsversorgung in einem oder in beiden Teilbordnetzen nicht die Möglichkeit die beiden Bordnetze über einen elektrischen Schalter galvanisch zu verbinden, da auch der Schalter bei ausgefallener Spannungsversorgung im Fahrzeug nicht geschaltet werden kann. Ferner muss der Fremdstartstützpunkt in Kombination mit einem elektrischer Schalter zwingend auf der Seite des schalterversorgenden Netzes sein. Bei einem Ausfall nur der in dem schalterversorgenden Netz befindlichen Batterie muss eine externe Spannungsquelle zum Einsatz kommen, da eine interne Umladung über die andere Batterie bei geöffnetem Schalter nicht erfolgt.
Eine geeignete Maßnahme, um die Fremdstartfähigkeit und die Fremdladefähigkeit bestmöglich zu gewährleisten, ist die Integration eines mechanischen Schaltelements zur Verbindung der Teilbordnetze im Falle einer Fremdladung oder im Falle eines Fremdstarts. Die Integration des mechanischen Schaltelements erfolgt vorzugsweise zusammen mit einer dem Fremdstartstützpunkt zugefügten mechanischen Logik, die einen externen leitenden Zugang zum Fremdstartstützpunkt und zum weiteren Bordnetz erst ermöglicht, wenn die Teilbordnetze miteinander galvanisch verbunden sind.
Die Integration eines solchen mechanischen Schaltelements bringt verschiedene Vorteile. Es wird eine wirksame externe Notversorgung eines Teilbordnetzes bei Ausfall eines anderen Teilbordnetzes gewährleistet. Ein Fremdstart ist für den Fahrzeugnutzer wie gewohnt durchführbar. Alle Teilbordnetze werden über einen Zugang von außen mit elektrischer Leistung versorgt. Bei einem Werkstattaufenthalt oder in der Fahrzeugproduktion können alle Batterien mit einem einzigen Ladegerät geladen werden.

Im Folgenden wird anhand der beigefügten Zeichnungen ein bevorzugtes Ausführungsbeispiel der Erfindung beschrieben. Daraus ergeben sich weitere Details, bevorzugte Ausführungsformen und Weiterbildungen der Erfindung. Ausgewählte Weiterbildungen werden ebenfalls erläutert. Im Einzelnen zeigen schematisch
Fig. 1 Zwei Teilbordnetze mit Gleichstromwandler
Fig. 2 Fremdstartvorrichtung mit versenktem Fremdstartstützpunkt in einem schematischen Schnitt
Fig. 3 Fremdstartvorrichtung mit frei zugänglichem Fremdstartstützpunkt in einem schematischen Schnitt
Fig. 4 Fremdstartstützpunkt mit Nuten

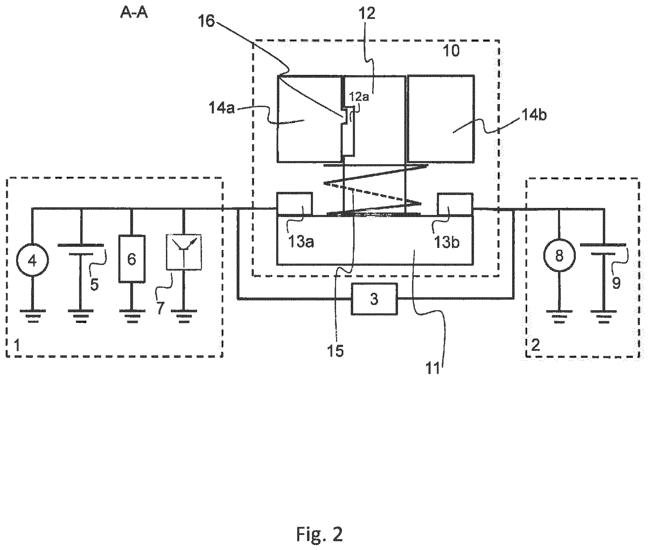

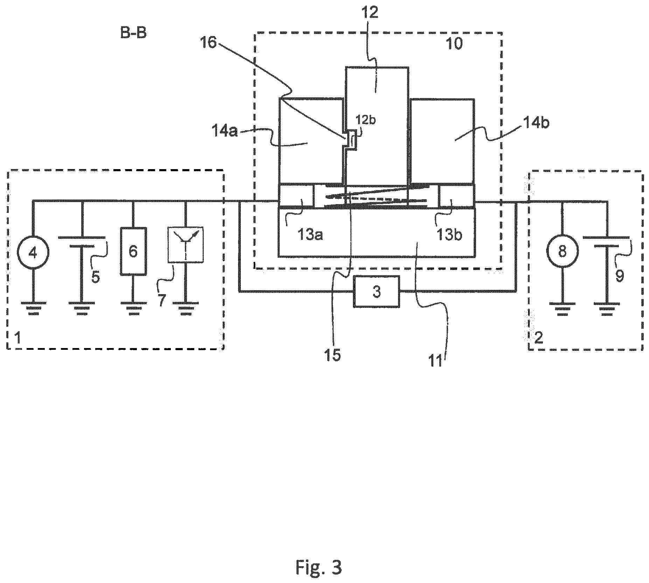

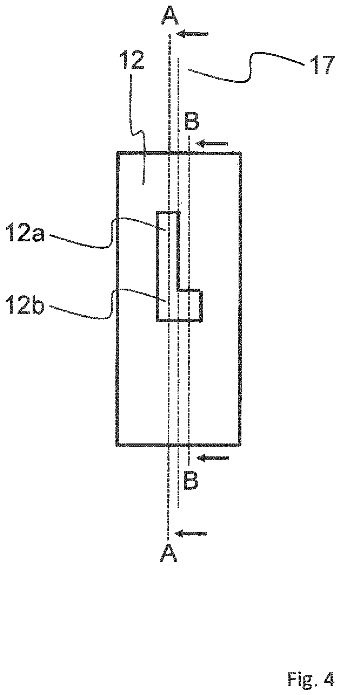

In allen Figuren gelten die gleichen Bezugszeichen gemäß der Bezugszeichenliste. Auf den Schnitt A-A in Fig. 4 wird in Fig. 2 verwiesen, auf den Schnitt B-B in Fig. 4 wird in Fig. 3 verwiesen.

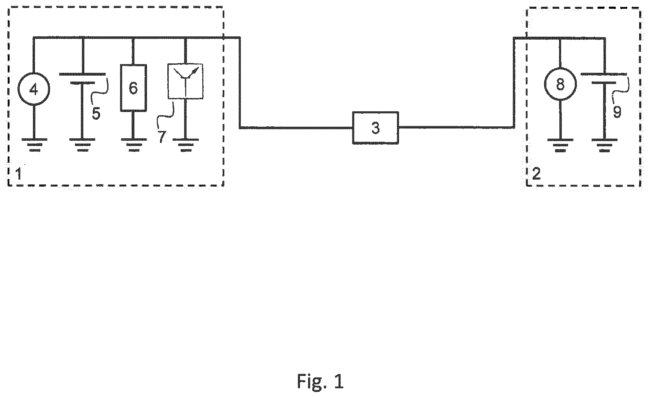

Fig. 1 zeigt einen topologischen Überblick des Bordnetzes eines Kraftfahrzeugs mit zwei Teilbordnetzen. Das erste Teilbordnetz (1) wird als Basisbordnetz bezeichnet und befindet sich bei einer nominalen Spannungslage von 14 Volt. Es weist einen von einem Verbrennungsmotor getriebenen Generator (4) auf, der elektrische Verbraucher (6) und Steuergeräte wie etwas das Motorsteuergerät (7) elektrisch speist. Ein elektrischer Energiespeicher, hier als Bordnetzbatterie (5) bezeichnet, kann vom Generator während des Fahrbetriebs geladen werden. Über einen unidirektionalen Gleichstromwandler (3) in der Leistungsklasse von 150 Watt ist ein zweites Teilbordnetz (2) mit nominaler Spannungslage bei 14 Volt an das Basisbordnetz angebunden. Die Betriebsspannung des Gleichstromwandlers wird vom Basisbordnetz bereitgestellt. An der Eingangsseite des Wandlers befindet sich das Basisbordnetz und an der Ausgangsseite des Gleichstromwandlers befindet sich das zweite Teilbordnetz. Das zweite Teilbordnetz wird als Zustartbordnetz bezeichnet und verfügt über einen elektrischen Energiespeicher (9), der als Zustartbatterie bezeichnet wird. Die Zustartbatterie speist insbesondere den Anlasser oder Starter (8) des Verbrennungsmotors.

Fig. 2 zeigt eine Fremdstartvorrichtung (10) mit einem versenkten Fremdstartstützpunkt in einem schematischen Schnitt. Die beiden Teilbordnetze sind topologisch wie in Fig. 1 angeordnet. Die Fremdstartvorrichtung ist elektrisch parallel zum Gleichstromwandler angeordnet. Die Fremdstartvorrichtung verfügt über eine isolierende Halterung (11). Der Halterung sind zwei metallische Kontakte (13a, 13b) aufgeprägt, die voneinander galvanisch getrennt sind, jedoch mit jeweils einem der beiden Teilbordnetze verbunden sind. Diese als Bordnetzkontakte bezeichneten metallischen Kontakte sind galvanisch von einem ebenfalls an der Halterung angebrachten Fremdstartstützpunkt (12) getrennt. Der Fremdstartstützpunkt ist im Wesentlichen metallisch und weist ein zylinderähnliche Grundform auf. Der Fremdstartstützpunkt ist in der schematischen Fig. 4 im Detail abgebildet. Der Fremdstartstützpunkt weist eine Zylinderachse auf. Die Zylinderachse liegt in der Ebene des Schnitts A-A, dessen mit Pfeilen in Fig. 4 gekennzeichnete Ansicht in Fig. 2 dargestellt ist. Der Schnitt A-A führt durch eine im Fremdstartstützpunkt abgesetzte, erste Nut (12a), die als Führungsnut bezeichnet wird. An dem der Halterung zugewandten Ende der Führungsnut setzt eine im Fremdstartstützpunkt abgesetzte zweite Nut (12b) an, welche als Feststellnut bezeichnet wird. Die Feststellnut führt entlang der Mantelfläche und senkrecht zur Führungsnut, so dass sich eine insgesamt L-förmige Nut auf dem Fremdstartstützpunkt abzeichnet. Der Schnitt B-B, in dessen Ebene die Zylinderachse des Fremdstartstützpunkts liegt, führt durch die Feststellnut. Die mit Pfeilen in Fig. 4 gekennzeichnete Ansicht des Schnitts B-B ist in Fig. 3 dargestellt. Fig. 3 zeigt die Fremdstartvorrichtung mit dem Fremdstartstützpunkt, dessen Mantelfläche zumindest teilweise frei zugänglich ist. Der Fremdstartstützpunkt in Fig. 3 und Fig. 2 wird von einer im Wesentlichen metallischen Komponente (14a,14b) mit im Wesentlichen ringartiger Grundform umschlossen. Die Ringkomponente wird als Fremdstartschalter bezeichnet. An der Innenseite des Fremdstartschalters befindet sich ein aufgesetzter Arretierstift (16), der mit kreisförmigem oder quadratischem Querschnitt ausgeführt sein kann. Der Arretierstift wird in der Führungsnut und der Feststellnut geführt. Der Durchmesser des Arretierstiftes oder seine Kantenlänge ist an die Breite der Nuten angepasst. Zwischen dem Fremdstartschalter und der Halterung ist ein elastisches Element (15), das beispielsweise als Schraubenfeder ausgeführt sein kann, eingeklemmt. In Fig. 2 drückt die Schraubenfeder den durch den Arretierstift in der Führungsnut geführten Fremdstartschalter gegen die Halterung in Richtung des von der Halterung abgewandten Endes des Fremdstartstützpunkts. Sobald der Arretierstift das von der Halterung abgewandte Ende der abgesetzten Führungsnut erreicht, ist der Fremdstartschalter relativ zum Fremdstartstützpunkt fixiert. Die Position des Arretierstifts an der Innenseite des Fremdstartschalters ist derart bemessen, dass in dieser oberen Stellposition die der Halterung abgewandten Seite des Fremdstartschalters mit dem Fremdstartstützpunkt abschliesst, so dass die Mantelfläche des Fremdstartstützpunkt an dem der Halterung abgewandten Ende des Fremdstartstützpunkts nicht zugänglich ist. Außerdem berührt der Fremdschalter in der oberen Stellposition nicht die Bordnetzkontakte. Deshalb kann eine Spannungs- oder Stromquelle nicht dauerhaft an dem mit den Teilbordnetzen kontaktlosen Fremdstartschalter angeschlossen werden.
Gegen den Druck der Schraubenfeder, die auch als Gummifeder ausgeführt sein kann, kann der zugängliche Fremdstartschalter manuell in Richtung der Halterung gedrückt werden. Diese Druckbewegung wird vom Arretierstift in der Führungsnut geführt bis der Arretierstift an dem der Halterung zugewandten Ende der Führungsnut ansteht. In dieser Position tritt der Arretierstift durch eine sich anschließende Drehbewegung des Fremdstartschalters relativ zum Fremdstartstützpunkt in die Feststellnut ein. Die Drehbewegung kann fortgesetzt werden bis der Arretierstift an dem der Führungsnut abgewandten Ende der abgesetzten Feststellnut ansteht. In dieser unteren Stellposition ist der Fremdstartschalter relativ zum Fremdstartstützpunkt so fixiert, dass die Mantelfläche des Fremdstartstützpunkt von dem der Halterung abgewandten Ende des Fremdstartstützpunkts zumindest in einem derart ausreichenden Maße zugänglich ist, dass eine standardisierte Klemme oder Zange eines Überbrückungskabels daran dauerhaft befestigt werden kann. Die Höhe der ringartigen Struktur des Fremdstartschalters ist genau derart bemessen, dass die der Halterung zugewandten Seite des Fremdstartschalters die beiden Bordnetzkontakte berührt, so dass ein galvanischer Kontakt entsteht. Zusammengefasst zeigt Fig. 2 den Fremdstartschalter in der oberen Stellposition, in der der Fremdstartstützpunkt versenkt ist und Fig. 3 den Fremdstartschalter in der unteren Stellposition, in der der Fremdstartstützpunkt zugänglich ist. Mit der Kombination aus einer Druck- und Drehbewegung sind beide Stellpositionen reversibel ineinander überführbar. In der oberen Stellposition besteht eine galvanische Trennung zwischen dem Basisbordnetz und dem Zustartbordnetz. Die elektrische Kopplung der beiden Teilbordnetze erfolgt ausschließlich über den unidirektionalen Gleichstromwandler. In der unteren Stellposition besteht eine dauerhafte und niederohmige galvanische Verbindung zwischen den Teilbordnetzen und dem Fremdstartstützpunkt über den Fremdstartschalter. Die untere Stellposition wird eingestellt, um dem Kraftfahrzeug Starthilfe zu geben oder eine Fremdladung durchzuführen. Durch die Gestaltung der Fremdstarteinrichtung wird der Zugang zum Fremdstartstützpunkt für das Laden der Bordnetzbatterie und der Zustartbatterie mit einer externen Spenderbatterie, einem externen Ladegerät oder einen anderweitigen externen Spannungs- und Stromquelle von geeigneter Spannungslage nur in der unteren Stellung des Fremdstartschalters ermöglicht. Erst in der unteren Stellposition kann eine externe Spannungsquelle angeschlossen werden. Wird in der unteren Stellposition des Fremdstartschalters zwischen dem freigelegten Fremdstartstützpunkt und der Masse des Fahrzeugs eine externe Spannungsquelle angeschlossen, wobei das positive Potential der Quelle mit dem Fremdstartstützpunkt und das negative Potential der Quelle mit der Fahrzeugmasse verbunden ist, werden die Bordnetzbatterie und die Zustartbatterie von der externen Leistungsquelle geladen. Die Leistungsaufnahme der Batterien und damit deren Ladezeit ist von deren Ladungsaufnahmefähigkeit oder von der Stromabgabefähigkeit der äußeren Leistungsquelle bei vorgegebener Ladespannung limitiert. Anders als in Topologien mit nur einem separaten Fremdstartstützpunkt für ein Teilbordnetz ist der Gleichstromwandler in der unteren Stellposition galvanisch überbrückt, so dass die vom Gleichstromwandler transferierbare Leistung keine Limitierung beim Laden oder bei einem Fremdstart darstellt. Ein Fremdstart des Fahrzeugs kann aus verschiedenen Gründen notwendig werden. Beispielsweise kann die Zustartbatterie defekt oder so stark entladen sein, dass der für einen Motorstart nötige Hochstrom nicht von der Zustartbatterie bereitgestellt werden kann. Auch die Bordnetzbatterie kann defekt oder so stark entladen sein, dass für ein Aufstarten des Fahrzeugs die Zündung von der Bordnetzbatterie nicht aktiviert und/oder die Motorsteuerung von der Bordnetzbatterie nicht in Betrieb gesetzt werden kann. Infolge einer langen Standzeit können auch beide Batterien defekt oder tiefentladen sein. Über die Fremdstarteinrichtung werden in der unteren Stellposition des Fremdstartschalters bei externer Spannungsquelle mit ausreichender Leistungsabgabe die Zündung und die Motorsteuerung mit der notwendigen Betriebsspannung gespeist und der Anlasser mit dem für einen Start nötigen Hochstrom versorgt.
Die Fremdstarteinrichtung kann außerdem betriebsstrategisch derart in das Energiemanagement des Fahrzeugs eingebunden sein, dass der Fahrzeuglenker über ein Anzeige-Bedienkonzept (zum Beispiele visuelle Anzeige in der Instrumententafel oder im Bordcomputer oder akustisches Signal) im Bedarfsfalle zum Betätigen des Fremdstartschalters aufgefordert wird. Dies kann zum Beispiel notwendig sein, um eine stark entladene Batterie durch einen internen Ladungsausgleich kurzzeitig zu laden. Auch die Aufforderung, den Fremdstartschalter wieder zu Lösen, d.h. in die obere Stellposition zurückzuführen, wird dem Fahrzeugführer angezeigt. Wird entgegen der Aufforderung, den Fremdstartschalter zu lösen, dieser nicht gelöst und bleibt dauerhaft in der unteren Stellposition arretiert, werden im Fahrzeug Betriebszustände, die einen Zustart erfordern, unterbunden oder deaktiviert.

Gemäß einer Variante dieser Ausführungsform weist der ringartige Fremdstartschalter einen Außendurchmesser auf, der die mit einer standardisierten Polzange eines Überbrückungskabels (siehe etwa Norm DIN 72553) erreichbaren Öffnungsweite übersteigt. Alternativ kann ein nichtleitendes Gehäuse beispielsweise aus Kunststoff, das die Halterung, die Bordnetzkonakte und die Außenseite des ringartigen Fremdstartschalters in der oberen und der unteren Stellposition umschliesst, angebracht sein, um eine Kontaktierung des Fremdstartschalters zu verhindern. Auch das der Halterung abgewandte Ende des Fremdstartstützpunkt kann mit einem entfernbaren Kunststoffdeckel versehen sein.

Nach einer weiteren vorteilhaften Ausführungsform ist eine dauerhafte Kontaktierung zwischen einer externen Spannungsquelle und dem Fremdstartstützpunkt nur bei korrekter Polung der äußeren Spannungsquelle gewährleistet. Der verpolte Anschluss externer Spannungsquellen an der Fremdstartvorrichtung wird unterbunden. Ein eingebauter Verpolschutz sorgt dafür, dass sich bei verpoltem Anschließen der externen Spannungsquelle die Arretierung des Fremdstartschalter in der unteren Stellung löst, um die Klemme oder den Stecker des verpolt angeschlossenen Kabels vom Fremdstartstützpunkt zu lösen. Alternativ wird bei Verpolung ein Warnton ausgegeben. Bei verpoltem Anschluss kann auch der Fremdstartstützpunkt abgesprengt werden.

Gemäß einer weiteren Ausführungsform kann dem Fahrer im Kombiinstrument visuell oder akustisch über ein Warnsignal angezeigt werden, den Fremdstartschalter in die untere Stellung zu bringen. Dadurch kommt es bei Mangelladung eines Speichers zu einem Ladungsausgleich zwischen den Energiespeichern, ohne dass eine externe Spannungsquelle angeschlossen ist.

Eine alternative Ausführungsform verfügt über eine in den Fremdstartschalter integrierte elektrisch leitende Druckfederanordnung mit elektrischen Kontakten, die für zusätzlichen Anpressdruck der Kontaktflächen zwischen dem Fremdstartschalter und den Bordnetzkontakten sorgt.

Auch der Druck- und Drehmechanismus des Fremdstarteinrichtung kann alternativ ausgeführt sein. Auf dem technischen Gebiet von Schreibgeräten ist beispielsweise ein Einrastmechanismus für Druckkugelschreiber allgemein bekannt, der reversibel eine Kugelschreibermine aus einem Griffrohr bewegt und im Griffrohr versenkt. Dieser Mechanismus kann auf die Fremdstarteinrichtung übertragen werden, indem der Fremdstartstützpunkt die Funktion einer Mine, der Fremdstartschalter die Funktion eines Griffrohrs und die Halterung die Funktion eines Druckknopfes übernimmt. Eine Druckfeder, eine Druckhülse und eine Vorschubhülse sind in die Fremdstarteinrichtung integriert. Der Mechanismus wird betätigt, indem der Fremdstartschalter gleichsam einem Griffrohr gegen die im Fahrzeug fixierte Halterung gleichsam einem Druckknopf gedrückt wird.
Der Mechanismus der Fremdstarteinrichtung kann auch als Kipp-, Klapp- oder Schraubmechanismus ausgeführt sein. Zum Beispiel kann ein klappbarer Plastikdeckel des Fremdstartstützpunkts den Fremdstartstützpunkt in einer arretierten Grundposition abdecken und bei einer arretierten, aufgeklappten Stellung zugänglich machen. In der aufgeklappten Position entsteht durch die geeignete Anordnung von metallischen Kontaktflächen eine galvanische Verbindung zwischen den Teilbordnetzen und dem Fremdstartstützpunkt.

### Bezugszeichenliste

- 1: Basisbordnetz
- 2: Zustartbordnetz
- 3: Gleichstromwandler
- 4: Generator
- 5: Bordnetzbatterie
- 6: Verbraucher
- 7: Motorsteuergerät
- 8: Starter
- 9: Zustartbatterie
- 10: Fremdstartvorrichtung
- 11: Halterung
- 12: Fremdstartstützpunkt
- 12a: Führungsnut
- 12b: Feststellnut
- 13a: Bordnetzkontakt 1
- 13b: Bordnetzkontakt 2
- 14a: Fremdstartschalter, ringförmig
- 14b: Fremdstartschalter, ringförmig
- 15: Schraubenfeder
- 16: Arretierstift
- 17: Zylinderachse

## Patentansprüche

1. Kraftfahrzeug mit einer Fremdstartvorrichtung, wobei das Kraftfahrzeug über einen Verbrennungsmotor mit Starter (8) verfügt, das Kraftfahrzeug mit mindestens zwei Teilbordnetzen (1,2), die über ein elektrisches Koppelelement (3) miteinander gekoppelt sind, und je Teilbordnetz mit mindestens einem wiederaufladbaren elektrischen Energiespeicher (5,9) ausgestattet ist, und das Kraftfahrzeug über einen Fremdstartstützpunkt (12) verfügt,
**dadurch gekennzeichnet,**
- **dass** die Fremdstartvorrichtung einen mechanischen Fremdstartschalter (14a, 14b) mit einer ersten Schaltstufe und mit einer zweiten Schaltstufe aufweist,
- **dass** die Teilbordnetze und der Fremdstartstützpunkt bei Einstellung der ersten Schaltstufe des Fremdstartschalters galvanisch getrennt sind und der Fremdstartstützpunkt nicht elektrisch kontaktierbar ist, und
- **dass** bei Einstellung der zweiten Schaltstufe des Fremdstartschalters die Teilbordnetze und der Fremdstartstützpunkt galvanisch verbunden sind und der Fremdstartstützpunkt elektrisch kontaktierbar ist, um den Starter von einer äußeren Spannungsquelle mit elektrischer Leistung für einen Fremdstart des Verbrennungsmotors zu versorgen oder um die wiederaufladbaren elektrischen Energiespeicher über den Fremdstartstützpunkt von einer äußeren Spannungsquelle zu laden.

2. Kraftfahrzeug nach Anspruch 1,
**dadurch gekennzeichnet,**
**dass** das elektrische Koppelelement als Gleichstromwandler und/oder als Relais oder als Schalter ausgeführt ist.

3. Kraftfahrzeug nach einem der Ansprüche 1 oder 2,
**dadurch gekennzeichnet,**
- **dass** der Fremdstartstützpunkt im Wesentlichen zylinderförmig ausgeführt ist, das heisst eine zylinderartige Grundform aufweist,
- **dass** der Fremdstartschalter im Wesentlichen ringförmig ausgeführt ist, das heisst eine ringartige Grundform aufweist, und den Fremdstartstützpunkt mit galvanischer Verbindung umschliesst,
- **dass** der Fremdstartstützpunkt und der Fremdstartschalter über einen gemeinsamen Druckmechanismus und/oder einen Drehmechanismus verfügen, durch welchen der Fremdstartschalter in einer von zumindest zwei vorgegebenen Stellpositionen gegenüber dem Fremdstartstützpunkt fixierbar ist.

4. Kraftfahrzeug nach Anspruch 3,
**dadurch gekennzeichnet,**
- **dass** bei eingestellter erster Schaltstufe des Fremdstartschalters der Fremdstartschalter relativ zum Fremdstartstützpunkt in einer oberen Stellposition fixiert ist,
- **dass** bei eingestellter zweiter Schaltstufe des Fremdstartschalters der Fremdstartschalter relativ zum Fremdstartstützpunkt in einer unteren Stellposition fixiert ist,
- **dass** bei in der oberen Stellposition fixiertem Fremdstartschalter die Mantelfläche der zylinderartigen Grundform des Fremdstartstützpunktes geometrisch abgeschirmt ist,
- **dass** bei in der unteren Stellposition fixiertem Fremdstartschalter die Mantelfläche der zylinderartigen Grundform des Fremdstartstützpunktes geometrisch zumindest teilweise für eine elektrische Kontaktierung offen zugänglich ist.

5. Kraftfahrzeug nach einem der Ansprüche 3 oder 4,
**dadurch gekennzeichnet,**
- **dass** der Fremdstartstützpunkt mit einer nichtleitenden Halterung (11) verbunden ist, und
- **dass** ein elastisches Federelement (15) zwischen der Halterung und dem Fremdstartschalter in axialer Richtung des Fremdstartstützpunktes rückstellend wirkt.

6. Kraftfahrzeug nach einem der Ansprüche 3 bis 5,
**dadurch gekennzeichnet,**
- **dass** der Fremdstartschalter mindestens einen aufgesetzten Arretierstift (17a) an der dem Fremdstartstützpunkt zugewandten Seite der ringartigen Grundform des Fremdstartschalters aufweist, und
- **dass** der Arretierstift in radiale Richtung der ringartigen Grundform des Fremstartschalters und der zylinderartigen Grundform des Fremdstartstützpunktes weist.

7. Kraftfahrzeug nach Anspruch 6,
**dadurch gekennzeichnet,**
- **dass** der Fremdstartstützpunkt für jeden Arretierstift eine abgesetzte erste Nut (12a) aufweist,
- **dass** die erste Nut den Arretierstift in Form einer Nut-Feder-Verbindung in axialer Richtung des Fremdstartstützpunktes führt,
- **dass** der Arretierstift am von der Halterung abgewandten Ende der abgesetzten ersten Nut durch die Rückstellung des elastischen Federelements in der oberen Stellposition fixierbar ist,
- **dass** der Fremdstartstützpunkt für jeden Arretierstift eine abgesetzte zweite Nut (12c) aufweist, die senkrecht zur ersten Nut ausgerichtet ist und die an dem der Halterung zugewandten Ende der ersten Nut in die erste Nut in einer L-Form übergeht,
- **dass** die zweite Nut den Arretierstift in Form einer Nut-Feder-Verbindung senkrecht zur axialen und senkrecht zur radialen Richtung der zylinderartigen Grundform des Fremdstartstützpunktes führt, das heisst den Fremdstartschalter rotatorisch um den Fremdstartstützpunkt führt, und
- **dass** der Arretierstift in der zweiten Nut durch die Rückstellung des elastischen Federelements in der unteren Stellposition fixierbar ist.

8. Kraftfahrzeug nach einem der Ansprüche 1 bis 7,
**dadurch gekennzeichnet,**
- **dass** der nichtleitenden Halterung für jedes Teilbordnetz mindestens ein leitendes Element (13a,13b) aufgeprägt ist, mit welchem das jeweilige Teilbordnetz galvanisch verbunden ist,
- **dass** die leitenden Elemente voneinander galvanisch getrennt sind,
- **dass** der Fremdstartschalter bei eingestellter erster Schaltstufe des Fremdstartschalters von den leitenden Elementen galvanisch getrennt ist, und
- **dass** der Fremdstartschalter bei eingestellter zweiter Schaltstufe des Fremdstartschalters mit den leitenden Elementen galvanisch verbunden ist.

## Claims

1. A motor vehicle comprising a jump start device, wherein the motor vehicle has an internal combustion engine with starter (8), the motor vehicle comprises at least two on-board electrical sub-systems (1, 2), which are coupled to one another via an electrical coupling element (3), and each on-board electrical sub-system is equipped with at least one rechargeable electrical energy storage device (5, 9), and the motor vehicle has a jump start terminal point (12),
**characterised in that**
- the jump start device has a mechanical jump start switch (14a, 14b) with a first switching step and with a second switching step,
- **in that,** when the first switching step of the jump start switch is selected, the on-board electrical sub-systems and the jump start terminal point are galvanically isolated and the jump start terminal point cannot be electrically contacted, and
- **in that,** when the second switching step of the jump start switch is selected, the on-board electrical sub-systems and the jump start terminal point are galvanically connected and the jump start terminal point can be electrically contacted so as to supply the starter with electrical power from an external voltage source in order to jump start the internal combustion engine or so as to charge the rechargeable electrical energy storage device from an external voltage source via the jump start terminal point.

2. A motor vehicle according to claim 1,
**characterised in that**
the electrical coupling element is embodied as a DC converter and/or as a relay or as a switch.

3. A motor vehicle according to any one of claims 1 or 2, **characterised in that**
- the jump start terminal point is substantially cylindrical, that is to say it has a cylinder-like basic shape,
- **in that** the jump start switch is substantially ring-shaped, that is to say it has a ring-like basic shape, and encircles the jump start terminal point with a galvanic connection, and
- **in that** the jump start terminal point and the jump start switch have a common pressure mechanism and/or a rotary mechanism, by means of which the jump start switch can be fixed in one of at least two predefined setting positions in relation to the jump start terminal point.

4. A motor vehicle according to claim 3,
**characterised in that**
- when the first switching step of the jump start switch is selected, the jump start switch is fixed relative to the jump start terminal point in an upper setting position,
- **in that,** when the second switching step of the jump start switch is selected, the jump start switch is fixed relative to the jump start terminal point in a lower setting position,
- **in that,** when the jump start switch is fixed in the upper setting position, the lateral surface of the cylinder-like basic shape of the jump start terminal point is geometrically shielded,
- **in that,** when the jump start switch is fixed in the lower setting position, the lateral surface of the cylinder-like basic shape of the jump start terminal point is geometrically at least partially freely accessible to be electrically contacted.

5. A motor vehicle according to any one of claims 3 or 4, **characterised in that**
- the jump start terminal point is connected to a non-conductive holder (11), and
- **in that** a resilient spring element (15) acts to provide a return force between the holder and the jump start switch in the axial direction of the jump start terminal point.

6. A motor vehicle according to any one of claims 3 to 5, **characterised in that**
- the jump start switch has at least one attached locking pin (17a) on the side of the ring-like basic shape of the jump start switch facing towards the jump start terminal point, and
- **in that** the locking pin points in the radial direction of the ring-like basic shape of the jump start switch and the cylinder-like basic shape of the jump start terminal point.

7. A motor vehicle according to claim 6,
**characterised in that**
- the jump start terminal point has a recessed first groove (12a) for each locking pin,
- **in that** the first groove guides the locking pin in the form of a tongue-and-groove connection in the axial direction of the jump start terminal point,
- **in that** the locking pin can be fixed in the upper setting position at the end of the recessed first groove facing away from the holder by the return force of the resilient spring element,
- **in that** the jump start terminal point has a recessed second groove (12c) for each locking pin, which second groove is oriented perpendicularly to the first groove and transitions into the first groove in an L shape at the end of the first groove facing towards the holder,
- **in that** the second groove guides the locking pin in the form of a tongue-and-groove connection perpendicularly to the axial direction and perpendicularly to the radial direction of the cylinder-like basic shape of the jump start terminal point, that is to say guides the jump start switch in a rotational manner about the jump start terminal point, and
- **in that** the locking pin can be fixed in the second groove in the lower setting position by the return force of the resilient spring element.

8. A motor vehicle according to any one of claims 1 to 7, **characterised in that**
- at least one conductive element (13a, 13b) is stamped onto the non-conductive holder for each on-board electrical sub-system, by means of which conductive element the corresponding on-board electrical sub-system is galvanically connected,
- **in that** the conductive elements are galvanically isolated from one another,
- **in that** the jump start switch is galvanically isolated from the conductive elements when the first switching step of the jump start switch is selected, and
- **in that** the jump start switch is galvanically connected to the conductive elements when the second switching step of the jump start switch is selected.

## Revendications

1. Véhicule comprenant un dispositif de démarrage externe, ce véhicule étant équipé d'un moteur à combustion interne muni d'un démarreur (8), d'au moins deux réseaux embarqués partiels (1, 2) couplés l'un à l'autre par l'intermédiaire d'un élément d'accouplement électrique (3), chaque réseau embarqué partiel étant équipé d'au moins un accumulateur d'énergie électrique rechargeable (5, 9), et le véhicule comportant une base de démarrage externe (12),
**caractérisé en ce que**
le dispositif de démarrage externe comprend un commutateur de démarrage externe mécanique (14a, 14b) ayant un premier étage de commutation et un second étage de commutation,
lors du réglage du premier étage de commutation du commutateur de démarrage externe les réseaux embarqués partiels et la base de démarrage externe sont galvaniquement isolés et la base de démarrage externe ne peut pas être mise en contact électrique, et
lors du réglage du second étage de commutation du commutateur de démarrage externe, les réseaux embarqués partiels et la base de démarrage externe sont galvaniquement connectés et la base de démarrage externe peut être mis en contact électrique pour alimenter le démarreur en puissance électrique à partir d'une source de tension externe pour permettre un démarrage externe du moteur à combustion interne, ou pour charger l'accumulateur d'énergie électrique rechargeable par l'intermédiaire de la base de démarrage externe à partir d'une source de tension externe.

2. Véhicule conforme à la revendication 1,
**caractérisé en ce que**
l'élément d'accouplement électrique est réalisé sous la forme d'un convertisseur à courant continu et/ou d'un relais ou d'un commutateur.

3. Véhicule conforme à l'une des revendications 1 et 2,
**caractérisé en ce que**
la base de démarrage externe est essentiellement cylindrique, c'est-à-dire a une forme de base en forme de cylindre,
le commutateur de démarrage externe est essentiellement annulaire, c'est-à-dire a une forme de base en forme d'anneau, et entoure la base de démarrage externe avec une liaison galvanique,
la base de démarrage externe et le commutateur de démarrage externe sont équipés d'un mécanisme de pression et/ou d'un mécanisme de rotation commun par lequel le commutateur de démarrage externe peut être fixé dans une position de réglage parmi au moins deux positions de réglage prédéfinies par rapport à la base de démarrage externe.

4. Véhicule conforme à la revendication 3,
**caractérisé en ce que**,
- lorsque le premier étage de commutation du commutateur de démarrage externe est réglé, le commutateur de démarrage externe est fixé dans une position de réglage haute par rapport à la base de démarrage externe,
- lorsque le second étage de commutation du commutateur de démarrage externe est réglé, le commutateur de démarrage externe est fixé dans une position de réglage basse par rapport à la base de démarrage externe,
- lorsque le commutateur de démarrage externe est fixé dans la position de réglage haute, la surface enveloppe de la forme de base cylindrique de la base de démarrage externe est géométriquement protégée,
- lorsque le commutateur de démarrage externe est fixé dans la position de réglage basse, la surface enveloppe de la forme de base cylindrique de la base de démarrage externe est géométriquement au moins partiellement accessible pour permettre une mise en contact électrique.

5. Véhicule conforme à l'une des revendications 3 et 4,
**caractérisé en ce que**
la base de démarrage externe est reliée à un support (11) non conducteur, et
un élément à ressort élastique (15) applique une force de rappel entre le support et le commutateur de démarrage externe dans la direction axiale de la base de démarrage externe.

6. Véhicule conforme à l'une des revendications 3 à 5,
**caractérisé en ce que**
- le commutateur de démarrage externe comporte au moins une goupille de blocage (17a) positionnée sur le côté de la forme de base annulaire du commutateur de démarrage externe tourné vers la base de démarrage externe, et
- la goupille de blocage s'étend dans la direction axiale de la forme de base annulaire du commutateur de démarrage externe et de la forme de base cylindrique de la base de démarrage externe.

7. Véhicule conforme à la revendication 6,
**caractérisé en ce que**
- la base de démarrage externe comporte, pour chaque goupille de blocage, une première rainure étagée (12a),
- la première rainure guide la goupille de blocage sous la forme d'une liaison à rainure et languette dans la direction axiale de la base de démarrage externe,
- la goupille de blocage peut être fixée à l'extrémité de la première rainure étagée située à l'opposé du support suite au rappel de l'élément à ressort élastique dans la position de réglage haute,
- la base de démarrage externe comporte pour chaque goupille de blocage une seconde rainure étagée (12c) qui est orientée perpendiculairement à la première rainure et passe dans la première rainure selon une forme de L à l'extrémité de cette première rainure tournée vers le support,
- la seconde rainure guide la goupille de blocage sous la forme d'une liaison à rainure et languette perpendiculairement à la direction axiale et perpendiculairement à la direction radiale de la forme de base cylindrique de la base de démarrage externe, ce qui signifie guide le commutateur de démarrage externe en rotation autour de la base de démarrage externe, et
- la goupille de blocage peut être fixée dans la seconde rainure suite au rappel de l'élément à ressort élastique dans la position de réglage basse.

8. Véhicule conforme à l'une des revendications 1 à 7,
**caractérisé en ce que**
- sur le support non conducteur est gravé pour chaque réseau embarqué partiel au moins un élément conducteur (13a, 13b) avec lequel le réseau de bord partiel respectif est galvaniquement relié,
- les éléments conducteurs sont galvaniquement séparés,
- lorsque le premier étage de commutation du commutateur de démarrage externe est réglé, le commutateur de démarrage externe est séparé galvaniquement des éléments conducteurs, et
- lorsque le second étage de commutation du commutateur de démarrage externe est réglé, le commutateur de démarrage externe est relié galvaniquement aux éléments conducteurs.
